# EUROPEAN PATENT APPLICATION

(11) **EP 3 560 664 A1**
(43) Date of publication of application: **30.10.2019**
(21) Application number: 17883933.8
(22) Date of filing: 20.12.2017
(51) Int. Cl.: B25J 11/00, B66F 19/00

(54) **ASSISTANCE TOOL**

(30) Priority: 22.12.2016 JP 2016249940; 22.12.2016 JP 2016249942
(71) Applicant: Kubota Corporation, Osaka-shi, Osaka 556-8601 (JP)
(72) Inventor: NAKATSUKA Masaki, Sakai-shi Osaka 590-0823 (JP); OKUNO Mayuko, Sakai-shi Osaka 590-0823 (JP); SHIOTA Tatsuya, Sakai-shi Osaka 590-0823 (JP); SAKAMOTO Kenta, Sakai-shi Osaka 590-0823 (JP); KOTANI Shinsuke, Sakai-shi Osaka 590-0823 (JP); SAKANO Tomoyoshi, Sakai-shi Osaka 590-0823 (JP); MITSUI Kenji, Sakai-shi Osaka 590-0823 (JP)
(74) Representative: Cabinet Beau de Loménie
(86) International application number: PCT/JP2017/045798
(87) International publication number: WO 2018/117184

(57) **Abstract**

An assistance tool includes, in a lift device (17) for elevating/lowering a hand portion, a rotary member (25-28) for lifting up/down the hand portion by winding up or paying out an inner cable (18a, 19a), an outer cable receiving portion (21) to which a terminal end of an outer cable (18b, 19b) is connected, a support case (36) for supporting the rotary member (25-28), and an electric motor (29) for rotatably driving the rotary member (25-28). A support member (15) is provided between the support case (36) and the outer cable receiving portion (21) and extends along a portion of the inner cable (18a, 19a) located between the rotary member (25-28) and the outer cable receiving portion (21).

## Description

### TECHNICAL FIELD

The invention relates to an assistance tool to be worn by a worker for its use in assisting a work (or an action) of the worker.

### BACKGROUND ART

### [Background Art 1]

An assistance tool disclosed in Patent Literature 1 includes a main body portion to be attached to the back of a worker, and an arm portion that extends upwards from the main body portion. The main body portion includes a lift device, from which cables extend. The cables extend along and downwards from the arm portion. A hand portion is connected to extension terminal ends of the cables.

With the above-described arrangement, a load is held by the hand portion and the cables are wound up by the lift device to elevate the hand portion. When the cables are paid out by the lift device, the hand portion is lowered. In this case, the worker holds the hand portion with his/her hands and attaches the hand portion to the load or detaches the hand portion from the load. In this, the worker will carry out the operation with taking care that the load will not sway during the elevation or lowering of the hand portion and also the hand portion will not detach from the load.

### [Background Art 2]

An assistance tool disclosed in Patent Literature 1 includes a main body portion to be attached to the back of a worker, and an arm portion that extends upwards from the main body portion. The main body portion includes a lift device, from which cables extend. The cables extend along the arm portion and are wound around a rotary member disposed at an upper portion of the arm portion to extend downwards therefrom. A hand portion is connected to extension terminal ends of the cables.

With the above-described arrangement, a load is held by the hand portion and the cables are wound up by the lift device to elevate the hand portion. When the cables are paid out by the lift device, the hand portion is lowered. In this case, the worker holds the hand portion with his/her hands and attaches the hand portion to the load or detaches the hand portion from the load. In this, the worker will carry out the operation with taking care that the load will not sway during the elevation or lowering of the hand portion and also the hand portion will not detach from the load inadvertently.

### BACKGROUND ART DOCUMENT

Patent Literature 1: Japanese Un-examined Patent Application Publication No. 2016-129916 (see JP 2016-129916 A or EP 3 246 285 A1 corresponding thereto)

### SUMMARY OF THE INVENTION

### PROBLEM TO BE SOLVED BY INVENTION

### [Problem 1]

Problem corresponding to [Background Art 1] is as follows.

In case the above-described assistance tool is provided with a cable, cables having an inner cable and an outer cable are often employed.

In the case of using such cables having an inner cable and an outer cable, one terminal end of the outer cable is connected to the arm portion and the other terminal end of the outer cable is connected to the main body portion. Further, one terminal end of the inner cable is connected to the hand portion and the other terminal end of the inner cable is connected to the lift device, so that the lift device effects winding/pay-out of the inner cable.

In the above-described arrangement, when a heavy load is held on the hand portion, at the arm portion, the inner cable is urged to be pulled out of the terminal end of the fixed outer cable.

On the other hand, at the main body portion, there is generated a large force that tends to pull the inner cable into the terminal end of the outer cable, in other words, as a reaction force to the above-described large force, there is generated a large force that tends to bring the terminal end of the outer cable closer to the lift device, so that the terminal end of the outer cable needs to be supported appropriately in the main body portion.

Then, in an assistance tool having a cable with an inner cable and an outer cable, there is a need for an arrangement that can, appropriately and without difficulty, support the terminal end of the outer cable located on the side of the main body portion.

### [Problem 2]

Problem corresponding to [Background Art 2] is as follows.

In Patent Literature 1, there are provided one cable for a right hand portion and one cable for a left hand portion. On the other hand, in order to be able to cope with a heavier load, it is conceivable to provide a plurality of cables for one hand portion.

If a plurality of cables are provided for one hand portion as described above, the plurality of cables will be wound around a rotary member of the arm portion and be extended downwards therefrom. Under this condition, winding and paying-out operations of the plurality of cables will be carried out by the lift device.

In this case, it is conceivable to arrange such that a plurality of grooves corresponding in number to the number of cables are formed along the circumferential direction of the rotary member in the outer circumferential portion thereof. With this, at time of winding and paying-out operations of the plurality of cables, the rotary member will be rotated with one cable entering each groove of the rotary member.

In the case of the above arrangement having a plurality of cables, due to e.g. a posture of the hand portion, the lower portions of the plurality of cables extending from the rotary member may cross or become entangled with each other.

If a winding operation of the plurality of cables is carried out under the above condition, those mutually crossing or entangled portions of the plurality of cables will rise, as they are, to reach the rotary member. With this, it becomes impossible for the respective groove to receive one cable therein, thus causing winding failure of the plurality of cables, which can eventually lead to development of jamming of the plurality of cables.

In view of the above, there is a need for an arrangement that can effectively prevent winding failure or trouble when a plurality of cables are provided for each one handle portion.

### SOLUTIONS TO THE PROBLEM

[1] In view of [Problem 1] above, there is proposed an assistance tool as follows.

An assistance tool comprising:
a main body portion to be attached to the back of a worker;
an arm portion that extends upwards from the main body portion;
a cable having an inner cable and an outer cable;
one terminal end of the outer cable being connected to the arm portion, a portion of the inner cable extending out of the one terminal end of the outer cable extending downwards from the arm portion, and a hand portion for holding a load being connected to one terminal end of the inner cable; and
a lift device provided in the main body portion, the other terminal end of the inner cable and the other terminal end of the outer cable being connected to the lift device;
the lift device including
   a rotary member to which the other terminal end of the inner cable is connected, the rotary member being configured to elevate the hand portion by winding up the inner cable, and to lower the hand portion by paying out the inner cable;
   an outer cable receiving portion to which the other terminal end of the outer cable is connected;
   a support case for rotatably supporting the rotary member; and
   an electric motor for rotating the rotary member forwardly and reversely; and
a support member provided between the support case and the outer cable receiving portion, the support member extending along a portion of the inner cable located between the rotary member and the outer cable receiving portion.

With the above-described arrangement, the lift device includes a rotary member, a support case that rotatably supports the rotary member and an electric motor for rotating the rotary member forwardly and reversely. In operation, as the rotary member is rotatably driven by the electric motor, the inner cable will be wound up around the rotary member to elevate the hand portion or paid out from the rotary member to lower the hand portion.

The lift device further includes an outer cable receiving portion to which the other terminal end of the outer cable is connected. And a support member is provided between the support case and the outer cable receiving portion, the support member extending along a portion of the inner cable that is located between the rotary member and the outer cable receiving portion.

With the above, when a heavy load is held on the hand portion and there is generated a large force which tends to bring the outer cable receiving portion closer to the rotary member, this large force will be supported directly by the support case from the outer cable receiving portion via the support member.

As for the support case rotatably supporting the rotary member, it is relatively easy to configure this support case with a sufficient strength. Thus, the above-described large force can be supported without difficulty by the support case.

In this case, since the support member extends along a portion of the inner cable that is located between the rotary member and the outer cable receiving portion, the above-described large force can be transmitted without loss of the force from the outer cable receiving portion via the support member to the support case to be supported thereby.

Namely, the above-described large force is supported within the permissible range of the lift device, and concentrated application thereof other than to the lift device, such as to the main body portion, hardly occurs. Thus, damage to e.g. the main body portion due to the above-described large force will not be invited.

According to one preferred embodiment, a pair of the support members are disposed in opposition to each other across the portion of the inner cable located between the rotary member and the outer cable receiving portion.

When a heavy load is held by the hand portion, according to the above-described arrangement, the above-described large force will be supported by the pair of support members from both sides. With this, the large force that tends to bring the outer cable receiving portion closer to the rotary member can be transmitted smoothly to the support case from the outer cable receiving portion via the pair of support members, thus being received and supported by the support case without difficulty.

According to one preferred embodiment, the support case, the outer cable receiving portion and the support member are formed integral with each other.

With the above-described arrangement, in the lift device, by forming the support case, the outer cable receiving portion and the support member integral with each other, the rigidness of these components as a whole, namely, the support case, the outer cable receiving portion and the support member, can be enhanced.

Thus, when a heavy load is held on the hand portion and there is generated a large force which tends to bring the outer cable receiving portion closer to the rotary member, this large force will be transmitted from the outer cable receiving portion via the support member to the support case to be received by this support case without difficulty.

[2] In view of [Problem 2] above, there is proposed an assistance tool as follows.

An assistance tool comprising:
a main body portion to be attached to the back of a worker;
an arm portion that extends upwards from the main body portion;
a lift device provided in the main body portion and configured to wind up and pay out a plurality of cables;
a rotary member rotatably supported to the arm portion, the plurality of cables extending from the lift device being wound around the rotary member to extend downwards therefrom;
a hand portion connected to respective extending terminal ends of the plurality of cables and configured to hold a load;
the lift device being configured to elevate the hand portion by winding up the plurality of cables, and to lower the hand portion by paying out the plurality of cables;
the rotary member having a groove portion for receiving one of the plurality of cables, the groove being defined in an outer circumferential portion of the rotary member and extending along the circumferential direction of the rotary member;
a plurality of the groove portions being provided side by side in the direction of a rotational axis of the rotary member; and
a guide portion having a cable guiding portion through which one of the plurality of cables is inserted, a plurality of the cable guiding portions being disposed side by side along the direction of the rotational axis of the rotary member in opposition to the plurality of groove portions of the rotary member.

With the above-described arrangement, a single cable received in one groove portion of the rotary member is caused to extend downwards through one guide portion (cable guiding portion) in opposition to this groove portion. There occurs no passage of a plurality of cables through one cable winding portion of the guide portion. Rather, the plurality of cables will extend downwards as being separated one by one by the cable guiding portions of the guide portion.

With the above-described arrangement, for instance, if there occurs mutual crossing or entangling of lower portions of the plurality of cables extending downwards from the rotary member and a winding operation of the plurality of cables is carried out by the lift device under this condition, such mutually crossing or entangled portions of the plurality of cables will rise to reach the guide portion.

Next, at this guide portion, the mutually crossing or entangled portions of the plurality of cables will be loosened and separated one from another by the cable guiding portions of this guide portion, so that the rotary member will be rotated with each separated single cable entering one groove portion opposed to this cable guiding portion to be wound up by the lift device.

As described above, with the above-described arrangement, even if a winding operation of the plurality of cables is effected by the lift device with the portions of the plurality of cables extending downwards from the rotary member crossing each other or entangled, it is possible for these mutually crossing or entangled portions of the plurality of cables to reach the rotary member while being loosened and separated from each other. Thus, jamming of the plurality of cables on the rotary member can be effectively prevented and smooth winding up of the plurality of cables is made possible. Consequently, the reliability of the operation of the assistance tool can be improved.

According to one preferred embodiment, the cable guiding portion is an elongate hole that is elongated along the circumferential direction of the rotary member.

For instance, when the worker wearing the assistance tool assumes a forwardly bent (crouched) posture or the hand portion holding a load sways in the front/rear direction, there occurs a change in the angle between the arm portion and the plurality of cables.

With the above-described arrangement, since the guiding portions (cable guiding portion) of the guide portion are elongate holes along the circumferential direction of the rotary member, even when the angle between the arm portion and the plurality of cables changes as described above, this will lead only to the plurality of cables moving along the guiding portions of the guide portion, whereby no forcible contact between the plurality of cables with the guiding portions of the guide portion will occur. With this, even in the event of change in the angle between the arm portion and the plurality of cables, no deterioration in the function of the cable guiding portions of the guide portion occurs.

According to one preferred embodiment, the guide portion is formed arcuate along the outer circumference of the rotary member.

With the above-described arrangement, the guide portion can be arranged in a compact manner along the outer circumference of the rotary member.

According to one preferred embodiment, the arm portion includes a cover that covers the upper side of the rotary member, and the guide portion is attached to the lower side of the cover.

With the above-described arrangement, a cover for covering the upper side of the rotary member is provided and the guide portion is attached to the lower side of the cover so that, the rotary member is covered by the cover and the guide portion. This is advantageous also in the respect of prevention of adherence or sticking of dust or the like to the rotary member.

Under the above-described state, according to the present invention, the guide portion can be used also as a portion of the cover that covers the rotary member. This is advantageous also in the respect of simplification of the arrangement.

[3] Further and other features and advantageous effects achieved thereby will become apparent upon reading the following explanation.

### BRIEF DESCRIPTION OF THE DRAWINGS

Fig. 1 is a right side view showing a condition in which a worker wears an assistance tool,
Fig. 2 is a rear view showing the condition in which the worker wears the assistance tool,
Fig. 3 is a rear view in vertical section of a lift device,
Fig. 4 is a left side view in vertical section of the lift device,
Fig. 5 is an exploded perspective view of the lift device,
Fig. 6 is a perspective view showing a pulley support member and a guide portion,
Fig. 7 is a side view in vertical section of the pulley support member and the guide portion,
Fig. 8 is a front view in vertical section of the pulley support portion and the guide portion,
Fig. 9 is a perspective view showing a lift device relating to Further Embodiment 1,
Fig. 10 is a perspective view of a lift device relating to Further Embodiment 2,
Fig. 11 is a perspective view of a lift device relating to Further Embodiment 3, and
Fig. 12 is a front view in vertical section showing a pulley support member and a guiding portion relating to Further Embodiment 5.

### EMBODIMENTS OF THE INVENTION

In the embodiments of the present invention, a front/rear direction and a right/left direction will be defined as follows, unless indicated otherwise. When a worker wears an assistance tool, the front side as viewed by the worker is defined as "front" and the rear side is defined as "rear"; and the right side is defined as "right" and the left side is defined as "left".

### [General Arrangement and Main Body Portion of Assistance Tool]

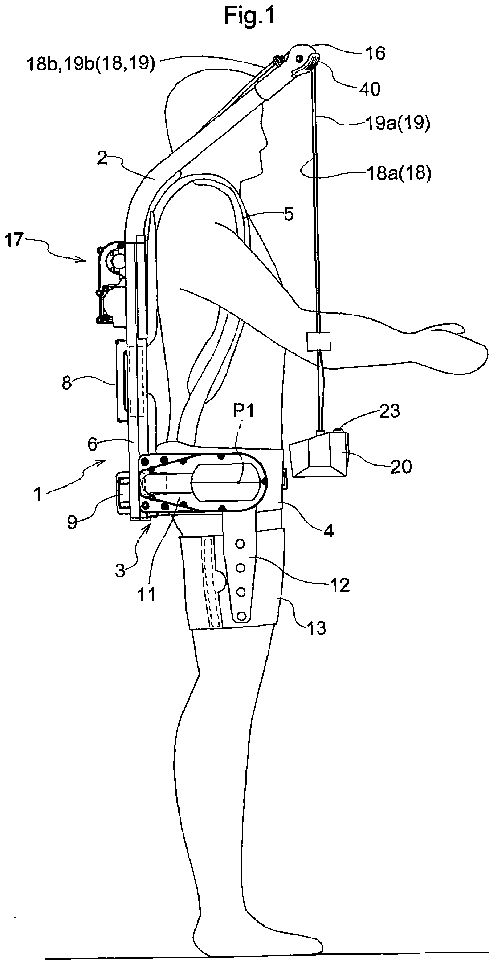

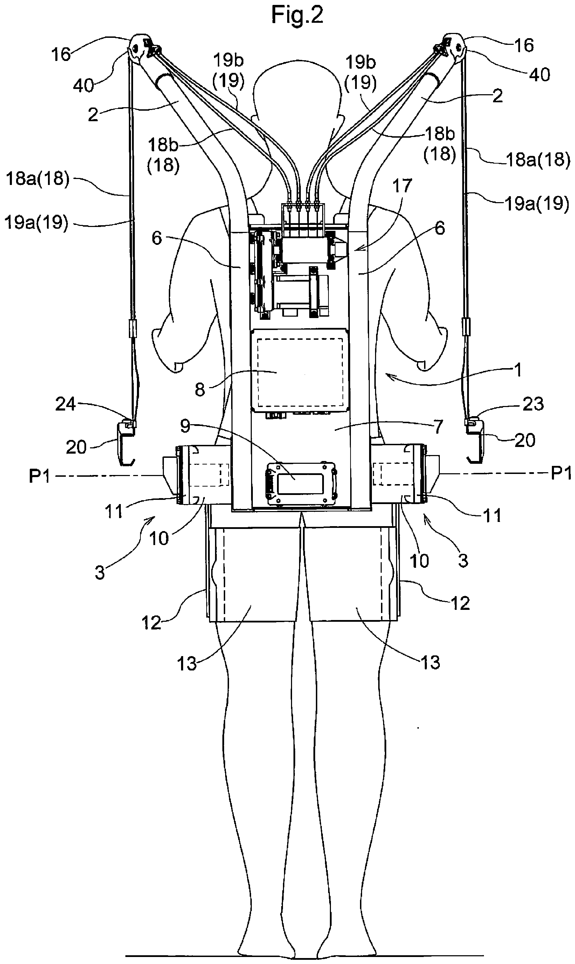

As shown in Fig. 1 and Fig. 2, an assistance tool includes a main body portion 1 to be attached to the back of the worker's body, right and left arm portions 2 extending upwards from upper portions of the main body portion 1, right and left leg-acting portions 3 provided at lower portions of the main body portion 1, right and left hand portions 20, cables 18, 19, an attachment belt 4 for attachment of the worker and right and left shoulder belts 5.

As shown in Fig. 1 and Fig. 2, the main body portion 1 includes right and left vertical frames 6, a support plate 7 connected to and between the right and left vertical frames 6, and so on, thus being formed like a framework as a whole. The attachment belt 4 is attached to the leg-acting portions 3 and the shoulder belts 5 are attached to upper portions of the front face of the support plate 7. A lift device 17 is connected to an upper portion of the rear face of the support plate 7, and a control device 8 is connected to a vertical intermediate portion of the rear face of the support plate 7. A battery 9 is attached to a lower portion of the rear face of the support plate 7.

As shown in Fig. 1 and Fig. 2, the worker will insert his/her arm portions (shoulders) to the shoulder belts 5 and wind the attachment belt 4 around his/her hip, whereby the main body portion 1 is mounted to the back of the worker's body.

As shown in Fig. 1 and Fig. 2, weights of the assistance tool and a load will be applied to mainly the worker's hip via the attachment belt 4, so that the weights of the assistance tool and the load can be supported by the worker's hip in a stable manner. The right and left shoulder belts 5 provide a main function of preventing dislocation of the main body portion 1 off the worker's back to the rear side.

### (Leg-Acting Portions)

As shown in Fig. 1 and Fig. 2, each one of the right and left leg-acting portions 3 includes a base portion 10, a power transmission case 11, an operational arm 12, a leg belt 13, etc. The base portion 10 is supported by a lower portion of the support plate 7 to be slidable in the right/left direction. And, the power transmission case 11 is connected to an outer end of the base portion 10 with forward orientation.

As shown in Fig. 1 and Fig. 2, the operational arms 12 are supported to be pivotable about a right/left extending horizontal axis P1 at a front portion of the power transmission case 11. The leg belts 13 in the form of wide belts are connected to terminal ends of the operational arms 12. Inside the power transmission case 11, there is provided a transmission portion (not shown) constituted of a plurality of spur gears. An electric motor (not shown) is accommodated in the base portion 10. In operation, by the electric motor via the transmission portion, the operational arms 12 are pivotally driven about the horizontal axis P1.

As described before, in the case of attachment of the main body portion 1 to the worker's back, when the worker fixes the attachment belt 4 by winding this belt 4 around his/her hip, together with this attachment belt 4, the right and left leg-acting portions 3 (base portions 10) can pivot in the right/left direction along the support plate 7.

With the above, depending on the amount of winding of the attachment belt 4 around the hip, the spacing between the right and left leg-acting portions 3 will be determined to suit the physical make of this worker. Thus, the right and left leg-acting portions 3 will be fixed in position via the attachment belt 4.

Thereafter, as shown in Fig. 1 and Fig. 2, the worker will wind the leg belts 13 around his/her thighs and attach the leg belts 13 to the thighs by means of surface fasteners (not shown) (typically "Magic Tape" (registered trademark)).

When the worker has attached the assistance tool, the right leg-acting portion 3 (power transmission case 11) is disposed on the right side of the worker's hip and the left leg-acting portion 3 (power transmission case 11) is disposed on the left side of the worker's hip.

### (General Arrangement of Lift Device, Electric Motor and Power Transmission Mechanism of Lift Device)

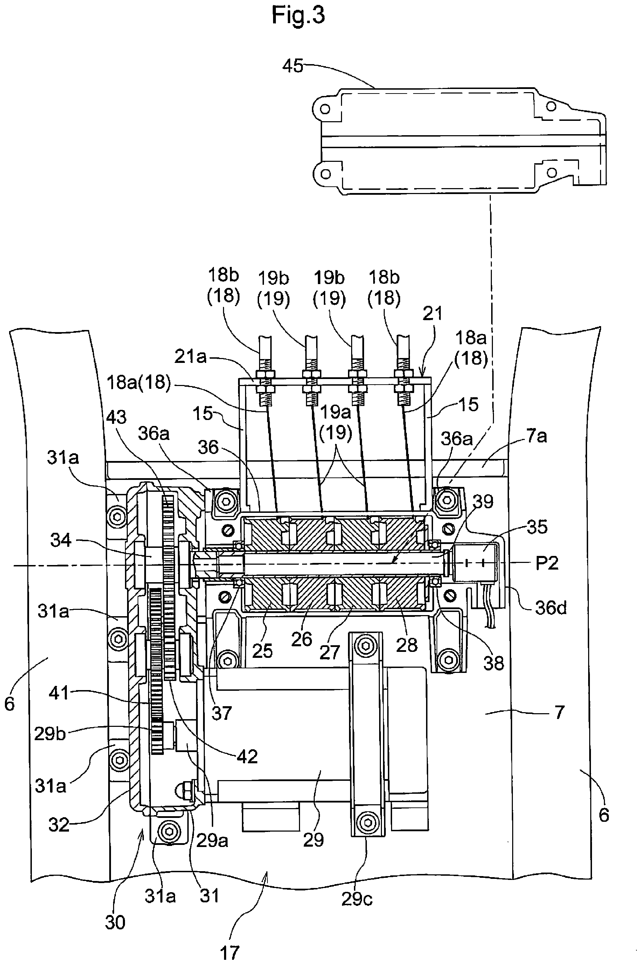

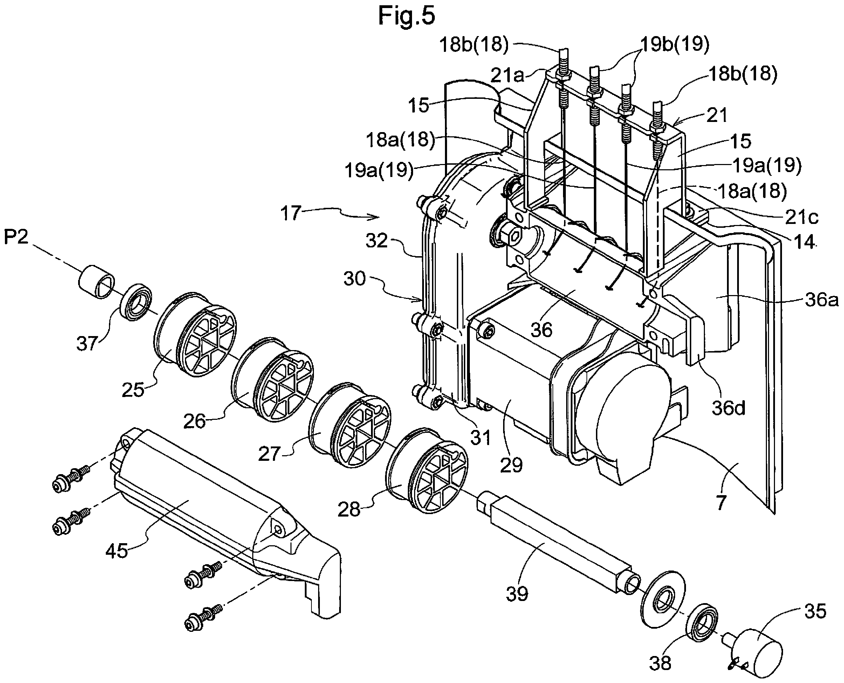

As shown in Fig. 3 and Fig. 5, the lift device 17 includes four wide pulleys 25, 26, 27, 28 (corresponding to "rotary members" of the lift device) disposed in the right/left direction to be rotatable about a right/left oriented rotational axis P2, an electric motor 29 disposed in the right/left direction beneath the pulleys 25-28, and a transmission mechanism 30 disposed in the vertical direction between a terminal end of an output shaft 29a of the electric motor 29 and the left terminal ends of the pulleys 25-28. In addition to these, the lift mechanism 17 includes an outer cable receiving portion 21 and right and left support members 15 to be described later.

As shown in Fig. 3 and Fig. 5, the transmission mechanism 30 includes a transmission case 31 and a lid portion 32, and leg portions 31a provided in the transmission case 31 are bolt-connected to the support plate 7. A terminal end of the output shaft 29a of the electric motor 29 is connected to a lower portion of the transmission case 31, and leg portions 29a of the electric motor 29 are bolt-connected to the support plate 7.

As shown in Fig. 3, in the transmission mechanism 30, at a position between the transmission case 31 and the lid portion 32, a large-diameter first gear 41 and a small-diameter second gear 42 are supported to be rotatable in unison. And, an output gear 29b connected to the output shaft 29a of the electric motor 29 is meshed with the first gear 41. To the transmission case 31 and an upper portion of the lid portion 32, a transmission shaft 34 is rotatably supported, and a third gear 43 operably coupled with this transmission shaft 34 is meshed with the second gear 42.

### (Supporting Arrangement of Pulleys in Lift Device)

As shown in Fig. 3, Fig. 4 and Fig. 5, the lift device 17 is provided with a semi-cylindrical support case 36. Leg portions 36a are provided at right and left ends of the support case 36, and as these leg portions 36a are bolt-connected to the support plate 7, the left side of the support case 36 is connected to the transmission case 31.

As shown in Fig. 3 and Fig. 5, at the positions of the right and left leg portions 36a of the support case 36, bearings 37, 38 are attached. And, via these bearings 37, 38, a drive shaft 39 is supported to the support case 36 to be rotatable about a horizontal axis P2 extending in the right/left direction, and the drive shaft 39 and the transmission shaft 34 are operably coupled to each other.

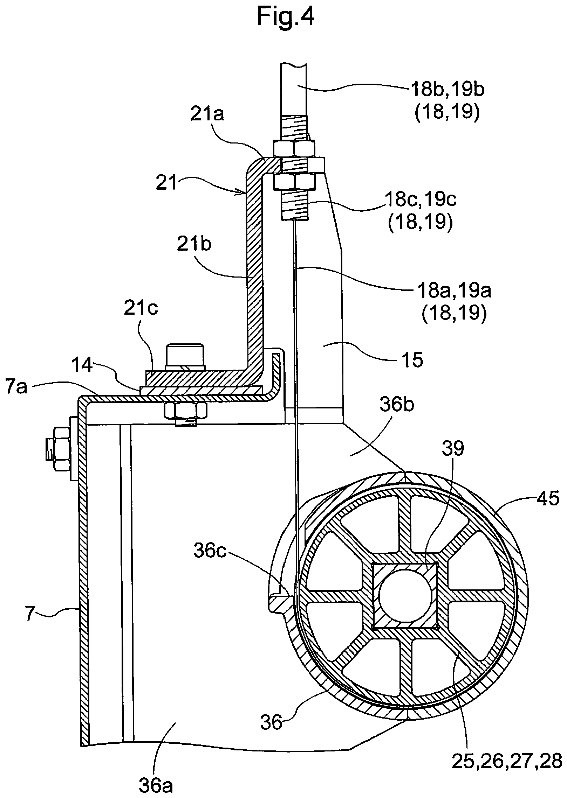

As shown in Fig. 4 and Fig. 5, the drive shaft 39 has a square-shaped cross section. Each of pulleys 25-28 is formed cylindrical of a synthetic resin and defines an attachment hole having a square-shaped cross section at its center portion. Then, as the drive shaft 39 is inserted to these attachment holes, the pulleys 25-28 will be attached to be rotatable with the drive shaft 39.

As shown in Fig. 3 and Fig. 5, the right end of the support case 36 extends to the right side to form a receiving portion 36d. And, at this receiving portion 36d of the support case 36, there is attached an angle sensor 35 (a rotary encoder) for detecting a rotational angle of the pulleys 25-28, and the angle sensor 35 is connected to the right end of the drive shaft 39.

As shown in Fig. 3, Fig. 4 and Fig. 5, the lift device 17 is provided with a semi-cylindrical cover member 45 formed of a transparent synthetic resin, with this cover member 45 being bolt-connected to the right and left leg portions 36a of the support case 36. The pulleys 25-28, the angle sensor 35 and the bearings 37, 38 are covered with the support case 36 and the cover member 45.

With the above-described arrangements in operation, as shown in Fig. 3, power of the electric motor 29 is transmitted to the drive shaft 39 via the transmission mechanism 30 (the first, second and third gears 41, 42, 43), whereby the pulleys 25-28 are driven to rotate in the winding side and the paying-out side.

The electric motor 29 is provided with an electromagnetic brake (not shown). At the time of operation state of the electric motor 29, the electromagnetic brake will be automatically rendered into a released state whereas, at the time of stopping and non-powered state of the electric motor 29, the electromagnetic brake will be automatically rendered into a braking state.

### (Supporting Arrangement of Lift-Device Side of Cables)

As shown in Fig. 3 and Fig. 4, at an upper portion of the support plate 7, there is provided a horizontal side portion 7a oriented rearwards. And, an outer cable receiving portion 21 is bolt-connected to this horizontal side portion 7a of the support plate 7 with an abutment plate 14 being sandwiched therebetween.

As shown in Fig. 4 and Fig. 5, the outer cable receiving portion 21 includes an upper face portion 21a, a vertical face portion 21b and a lower face portion 21c, to be formed like a crank as seen in its side view. And, the lower face portion 21c of the outer cable receiving portion 21 is bolt-connected to the horizontal side portion 7a of the support plate 7.

As shown in Fig. 3, Fig. 4 and Fig. 5, terminal ends 18c, 19c (corresponding to "the other ends of the outer cables") of outer cables 18b, 19b of the cables 18, 19 are connected to the upper face portion 21a of the outer cable receiving portion 21. The support case 36 has four openings 36c in opposition to the four pulleys 25-28, respectively.

As shown in Figs. 3, 4 and 5, the inner cable 18a of the left cable 18 extends through the opening 36c opposed to the pulley 25 of the support case 36 and the terminal end (corresponding to "the other terminal end of the inner cable") of the inner cable 18a of the left cable 18 is connected to the pulley 25.

The inner cable 19a of the right cable 19 extends through the opening 36c opposed to the pulley 26 of the support case 36, and the terminal end (corresponding to "the other terminal end of the inner cable") of the inner cable 19a of the left cable 19 is connected to the pulley 26.

As shown in Figs. 3, 4 and 5, the inner cable 18a of the right cable 18 extends through the opening 36c opposed to the pulley 28 of the support case 36, and the terminal end (corresponding to "the other terminal end of the inner cable") of the inner cable 18a of the right cable 18 is connected to the pulley 28.

The inner cable 19a of the right cable 19 extends through the opening 36c opposed to the pulley 27 of the support case 36 and the terminal end (corresponding to "the other terminal end of the inner cable") of the inner cable 19a of the right cable 19 is connected to the pulley 27.

As shown in Figs. 3, 4 and 5, a right support member 15 is connected at the right edges of the upper face portion 21a and vertical face portion 21b of the outer cable receiving portion 21. And, a left support member 15 is connected at the left edges of the upper face portion 21a and vertical face portion 21b of the outer cable receiving portion 21.

As shown in Fig. 4 and Fig. 5, receiving portions 36b are formed at upper portions of the right and left leg portions 36a of the support case 36. The right and left support members 15 extend downwards, and lower ends of these right and left support members 15 are placed in abutment against the right and left receiving portions 36b.

With the above-described arrangement, as shown in Figs. 3, 4 and 5, the right and left support members 15 extend toward the support case 36 along portions of the inner cables 18a, 19a of the cables 18, 19 which portions are located between the pulleys 25-28 and the upper face portion 21a of the outer cable receiving portion 21.

The right and left support members 15 are disposed in opposition to each other across the portions of the inner cables 18a, 19a of the cables 18, 19 which portions are located between the pulleys 25-28 and the upper face portion 21a of the outer cable receiving portion 21.

### (Arm Portions)

As shown in Fig. 1 and Fig. 2, upper portions of the right and left vertical frames 6 extend obliquely forwardly and obliquely upwardly beyond the right and left shoulders of the worker, thus forming right and left arm portions 2. And, at the upper ends of the right and left arm portions 2, right and left pulley support members 16 are attached.

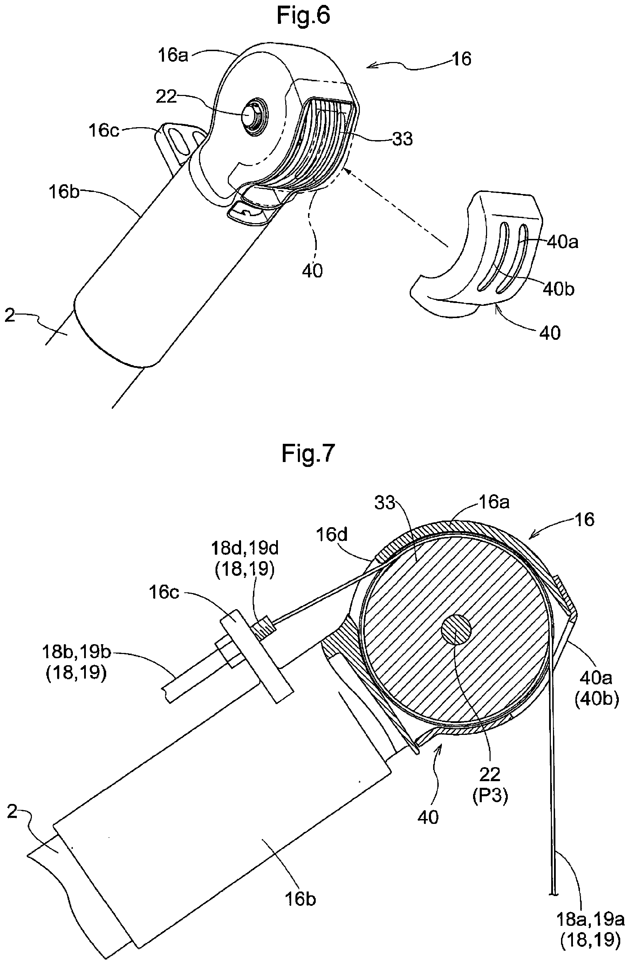

As shown in Figs. 6, 7 and 8, each pulley support member 16 is formed integrally of a supporting portion 16a (corresponding to "a cover") having a semi-circular shape with a lower side thereof opened as seen in a side view, a cylindrical attaching portion 16b, an outer cable receiving portion 16c and an opening portion 16d, with the attaching portion 16b of the pulley support member 16 being attached to the upper end of the arm portion 2.

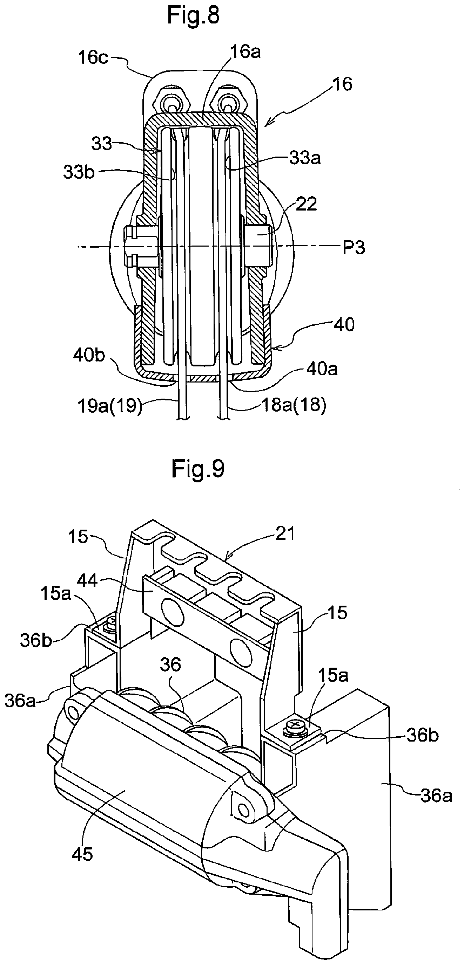

As shown in Figs. 6, 7 and 8, a support shaft 22 is supported horizontally to the supporting portion 16a of the pulley support member 16, and a pulley 33 (corresponding to "a support body supported to an arm portion") is supported to be rotatable about a rotational axis P3 of the support shaft 22. The pulley 33 is formed with a wide width and two groove portions 33a, 33b are formed in the outer circumference of the pulley 33 along the circumferential direction, with the groove portions 33a, 33b being formed side by side in the direction of the rotational axis P3 (see Fig. 8).

As shown in Fig. 7, the right cables 18, 19 extend along the right arm portion 2; and terminal ends 18d, 19d (corresponding to "one terminal end of the outer cable") of the outer cables 18b, 19b of the right cables 18, 19 are connected to the outer cable receiving portion 16c of the pulley support member 16.

As shown in Fig. 7 and Fig. 8, the inner cables 18a, 19a of the right cables 18, 19 extend through the opening portion 16d of the pulley support member 16 into the inside of the supporting portion 16a of the pulley support member 16. The inner cable 18a of the right cable 18 extends into the groove portion 33a and the inner cable 19a of the right cable 19 extends into the groove portion 33b, and the inner cables 18a, 19a of the right cables 18, 19 are wound around the pulley 33 to extend downwards therefrom.

Similarly to the right cables 18, 19, the left cables 18, 19 are attached to the left arm portion 2, the pulley support member 16 and the pulley 33 to extend downwards.

### (Hand Portions)

As shown in Fig. 1 and Fig. 2, the right hand portion 20 is connected to extending terminal ends (corresponding to "one terminal end of the inner cable 18a, 19a") of the inner cables 18a, 19a of the right cables 18, 19. And, the left hand portion 20 is connected to extending terminal ends (corresponding to "one terminal end of the inner cable 18a, 19a") of the inner cables 18a, 19a of the left cables 18, 19.

As shown in Fig. 1 and Fig. 2, the right and left hand portions 20 are provided in the form of hooks formed by bending plate members, which have shapes in right/left symmetry. The right hand portion 20 is provided with an elevation operational switch 23 and the left hand portion 20 is provided a lowering operational switch 24. And, the elevation operational switch 23 and the lowering operational switch 24 are connected to the control device 8 via harness (not shown).

As shown in Fig. 1 and Fig. 2, when the worker wears the assistance tool, the worker will grip the right hand portion 20 with the right hand and will grip the left hand portion 20 with the left hand. Under this condition, the worker will push the elevation operational switch 23 and the lowering operational switch 24 with the thumb of the right/left hand.

As shown in Fig. 1 and Fig. 2, the elevation operational switch 23 and the lowering operational switch 24 are configured as return type. When the worker pushes the elevation operational switch 23 and the lowering operational switch 24, operational signals are outputted from the elevation operational switch 23 and the lowering operational switch 24. When the worker stops the pushing operations on the elevation operational switch 23 and the lowering operational switch 24, the operational signals from the elevation operational switch 23 and the lowering operational switch 24 will be stopped.

With the above-described arrangements in operation, as shown in Figs. 1, 2 and 3, in the lift device 17, when the pulleys 25-28 are rotatably driven by the electric motor 29 to the winding side, the inner cables 18a, 19a of the cables 18, 19 will be wound up around the pulleys 25-28, whereby the hand portion 20 will be elevated.

Whereas, when the pulleys 25-28 are rotatably driven by the electric motor 29 to the paying-out side, the inner cables 18a, 19a of the cables 18, 19 will be paid out from the pulleys 25-28, whereby the hand portion 20 will be lowered.

### (Guide Portion Attached to Pulley Support Member)

As shown in Fig. 1 and Fig. 2, right and left guide portions 40 are attached to lower portions of the supporting portions 16a of the right and left pulley support members 16. The upper side of the pulley 33 is covered by the supporting portion 16a of the pulley support member 16. The lower side of the pulley 33 is covered by the guide portion 40. Thus, the entire pulley 33 is covered with the supporting portion 16a of the pulley support member 16 and the guide portion 40.

As shown in Figs. 6, 7 and 8, the guide portion 40 is formed arcuate as seen in a side view so as to extend along the lower side of the supporting portion 16a of the pulley support member 16 and the outer circumference of the pulley 33. The guide portion 40 defines two elongate holes 40a, 40b (corresponding to "cable guiding portions").

As shown in Figs. 6, 7 and 8, when the guide portion 40 is attached to the lower side of the supporting portion 16a of the pulley support member 16, the elongate hole 40a of the guide portion 40 is positioned in opposition to the lower side of the groove portion 33a of the pulley 33, and the elongate hole 40b of the guide portion 40 is positioned in opposition to the lower side of the groove portion 33b of the pulley 33.

As shown in Fig. 8, the elongate holes 40a, 40b of the guide portion 40 are provided in this guide portion 40 to be arranged side by side in the direction of the rotational axis P3, and arranged along the circumferential direction (the groove portions 33a, 33b of the pulley 33), as shown in Fig. 7.

With the above-described arrangement, as shown in Fig. 7 and Fig. 8, in the respective right and left guide portions 40, the inner cable 18a of the cable 18 extends through the elongate hole 40a of the guide portion 40 and the inner cable 19a of the cable 19 extends through the elongate hole 40b of the guide portion 40.

### (Operational Modes of Assistance Tool)

For instance, in one conceivable situation, when a load placed on a floor is to be placed onto a high shelf or on a load carrier platform of a truck, the worker will crouch and hold the load on the floor. Then, the worker will stand up with holding the load with his/her arms extended downwards and then lift up the load with the hands and place it onto the high shelf or the load carrier platform of the truck. Then, there will be explained a case in which under the above-described situation, the leg-acting portions 3 and the lift device 17 are operated by the control device 8.

As shown in Fig. 1 and Fig. 2, when the worker wears the assistance tool, unless the worker pushes both the elevation operational switch 23 and the lowering operational switch 24, the electric motor 29 of the lift device 17 remains stopped and the electric motors of the leg-acting portions 3 will remain under the stopped state (free rotation state).

When the worker walks or drops the waist (crouches), the operational arms 12 will be pivoted to follow the worker's thighs, not interfering with the worker's action.

Next, when the worker crouches and holds the load on the floor with hands, if the worker pushes the lowering operational switch 24, in the lift device 17, the electric motor 29 will be operated to the paying-out side, so that the inner cables 18a, 19a of the cables 18, 19 will be paid out and the hand portions 20 will be lowered. When the pushing operation on the lowering operational switch 24 is stopped, the electric motor 29 is stopped, thus stopping the hand portions 20. With this, the load will be held by the hand portions 20.

As described above, at the time of operation state of the electric motor 29, the electromagnetic brake will be automatically rendered into a released state whereas, at the time of stopping and non-powered state of the electric motor 29, the electromagnetic brake will be automatically rendered into a braking state. Whereby, when the electric motor 29 is stopped, the inner cables 18a, 19a of the cables 18, 19 will not be paid out from the lift device 17, and thus even if the weight of the load is applied to the hand portions 20 as will be described later, no lowering of the hand portions 20 will occur.

Next, the worker will rise up with holding the load by the hand portions 20, thus lifting the load off the floor. Under this condition, if the worker pushes the elevation operational switch 23, at the leg-acting portions 3, the operational arms 12 will be driven to the lowering side, thus assisting the rise-up action of the worker. In this way, when the worker rises up, no lowering of the hand portions 20 will occur, thanks to the above-described braking function of the electric motor 29.

As described above, after the worker rises up with pushing the elevation operational switch 23, if it is detected that the operational arms 12 have arrived at the positions at which these arms 12 are oriented substantially perpendicularly downwards in the leg-acting portions 3, it is determined that the worker has risen up completely, so that the electric motors of the leg-acting portions 3 will be rendered into the stopped state (free rotation state).

Next, in the lift device 17, when the electric motor 29 is operated to the winding side to wind up the inner cables 18a, 19a of the cables 18, 19, whereby the hand portions 20 will be elevated. When the hand portions 20 have been elevated to a desired position, the pushing operation on the elevation operational switch 23 will be stopped, whereby the electric motor 29 will be stopped, thus stopping the hand portions 20.

In this case, as shown in Fig. 7 and Fig. 8, the inner cable 18a of the cable 18 will pass through the elongate hole 40a of the guide portion 40 to enter into the groove portion 33a of the pulley 33; and the inner cable 19a of the cable 19 will pass through the elongate hole 40b of the guide portion 40 to enter into the groove portion 33b of the pulley 33, whereby the pulley 30 will be rotated to the winding side.

Next, the worker will move by walking to e.g. a high shelf or a load carrier platform of a truck where the load is to be placed. When the worker arrives at the high shelf, the load carrier platform of the truck or the like and pushes the lowering operational switch 24, in the lift device 17, the electric motor 29 will be operated to the paying out side, whereby the inner cables 18a, 19a of the cables 18, 19 will be paid out to lower the hand portions 20.

In this case, as shown in Fig. 7 and Fig. 8, the inner cable 18a of the cable 18 will leave the groove portion 33a of the pulley 33 and then pass the elongate hole 40a of the guide portion 40, and the inner cable 19a of the cable 19 will leave the groove portion 33b of the pulley 33 and then pass the elongate hole 40b of the guide portion 40, while the pulley 33 is rotated to the paying-out side.

With the above, the load will be placed on the high shelf, the load carrier platform of the truck or the like, and the hand portions 20 will be removed from the load. As described above, after the load is placed on the high shelf, the load carrier platform of the truck or the like, the assistance tool will return to the initial state and similar operations will be effected for a next load.

### (States of Cables on Lift Device Side at Time of Operation of Assistance Tool)

In the above-described situation described above ("Operational Modes of Assistance Tool"), when the worker who has crouched with holding the load with the hand portions is to rise up, and when the hand portions 20 are to be elevated, the weight of the load will be applied to the hand portions 20. So that, as shown in Fig. 7, in each arm portion 2, the inner cables 18a, 19a tend to be pulled out of the terminal ends 18d, 19d of the outer cables 18b, 19b of the cables 18, 19.

Under the above-described condition, in the main body portion 1, as shown in Figs. 3, 4 and 5, there will be generated a large force that tends to pull the inner cables 18a, 19a of the cables 18, 19 into the terminal ends 18c, 19c of the outer cables 18b, 19b, namely, a large force that tends to bring the pulleys 25-28 closer to the outer cable receiving portion 21.

In other words, as shown in Figs. 3, 4 and 5, as a reaction force to the large force that tends to bring the pulleys 25-28 closer to the outer cable receiving portion 21, there will be generated a large force that tends to bring the terminal ends 18c, 19c of the outer cables 18b, 19b of the cables 18, 19 closer to the pulleys 25-28, namely, a large force that tends to bring the outer cable receiving portion 21 closer to the pulleys 25-28.

As shown in Figs. 3, 4 and 5, in the main body portion 1, the large force that tends to bring the pulleys 25-28 closer to the outer cable receiving portion 21 and the large force that tends to bring the outer cable receiving portion 21 closer to be pulleys 25-28 are forces in mutually opposite directions, which offset each other.

In other words, as shown in Figs. 3, 4 and 5, the large force that tends to bring the outer cable receiving portion 21 closer to the pulleys 25-28 will be transmitted efficiently to the support case 36 from the outer cable receiving portion 21 via the right and left support members 15, thus being received and supported by the support case 36 directly and without difficulty.

With the above, the large force that tends to bring the outer cable receiving portion 21 closer to the pulleys 25-28 will be supported within the permissible range of the lift device 17, hardly applied to the main body portion 1 or to the horizontal side portion 7a of the support plate 7.

As shown in Figs. 3, 4 and 5, the lower ends of the right and left support members 15 are placed in abutment against the receiving portions 36b of the leg portions 36a of the support case 36, so that the large force that tends to bring the outer cable receiving portion 21 closer to the pulleys 25-28 is supported by the leg portions 36a of the support case 36.

In this case, as the leg portions 36a of the support case 36 are provided with sufficient strength, the large force that tends to bring the outer cable receiving portion 21 closer to the pulleys 25-28 will be received and supported by the leg portions 36a of the support case 36 without difficulty.

### (States of Cables on Arm Portion Side at Time of Operation of Assistance Tool)

Under the condition shown in Fig. 1 and Fig. 2, if e.g. the hand portion 20 is rotated to the left or right, it may happen that the portions of the inner cables 18a, 19a of the cables 18, 19 downwardly of the pulley 33 may cross each other or get entangled with each other.

Under the above-described condition, as described in the foregoing section ("Operational Modes of Assistance Tool"), when the hand portion 20 is elevated as the pulleys 25-28 are rotatably driven to the winding side by the electric motor 29, as shown in Fig. 7 and Fig. 8, such mutually crossing or entangled portions of the inner cables 18a, 19a of the cables 18, 19 will rise to reach the guide portion 40.

As shown in Fig. 7 and Fig. 8, after such mutually crossing or entangled portions of the inner cables 18a, 19a of the cables 18, 19 have reached the guide portion 40, if the pulleys 25-28 are further rotatably driven to the winding side, the mutually crossing or entangled portions of the inner cables 18a, 19a of the cables 18, 19 will be loosened by the guide portion 40, and the inner cable 18a of the cable 18 will be guided into the elongate hole 40a of the guide portion 40, whereby the inner cable 19a of the cable 19 will be guided into the elongate hole 40b of the guide portion 40.

With the above, as shown in Fig. 7 and Fig. 8, the crossing or entangled portions of the inner cables 18a, 19a of the cables 18, 19 will be separated one by one of the inner cables 18a, 19a of the cables 18, 19 by the elongate holes 40a, 40b of the guide portion 40. Thus, the inner cable 18a of the cable 18 will pass through the elongate hole 40a of the guide portion 40 to enter into the groove portion 33a of the pulley 33, and the inner cable 19a of the cable 19 will pass through the elongate hole 40b of the guide portion 40 to enter into the groove portion 33b of the pulley 33, whereby the pulley 33 will be rotated to the winding side.

As shown in Fig. 7, the elongate holes 40a, 40b of the guide portion 40 extend along the circumferential direction of the pulley 33. With this, for instance, even if the angle between the arm portion 2 and the inner cables 18a, 19a of the cables 18, 19 changes as the worker wearing the assistance tool assumes a forwardly crouching posture or the hand portion 20 holding a load sways in the front/rear direction, the inner cables 18a, 19a of the cables 18, 19 will move along the elongate holes 40a, 40b of the guide portion 40.

As shown in Fig. 7, the guide portion 40 is formed arcuate to follow the outer circumference of the pulley 33 as seen in the side view. With this, the distance between the respective groove portions 33a, 33b of the pulley 33 and the respective elongate holes 40a, 40b of the guide portion 40 is made nearly constant at any part of the elongate holes 40a, 40b of the guide portion 40.

As described above, thanks to the arrangement of the elongate holes 40a, 40b of the guide portion 40 extending along the circumferential direction of the pulley 33 and the arrangement of the guide portion 40 being arcuate to follow the outer circumference of the pulley 33 as seen in the side view, the mutually crossing or entangled portions of the inner cables 18a, 19a of the cables 18, 19 can be loosened by the guide member 40 in a stable manner, and the inner cables 18a, 19a of the cables 18, 19 can be guided by the groove portions 33a, 33b of the pulley 33 in a stable manner also.

### [Further Embodiment 1]

Instead of the arrangement shown in Figs. 3, 4 and 5, a modified arrangement as follows is also possible.

As shown in Fig. 9, receiving portions 36b are provided immediately above the leg portions 36a of the support case 36 and outwardly oriented connecting portions 15a are provided at the lower ends of the right and left support members 15. And, the connecting portions 15a of the support member 15 are bolt-connected to the receiving portions 36b of the support case 36. With this arrangement, the outer cable receiving portion 21 need not be connected to the horizontal side portion 7a of the support plate 7.

As shown in Fig. 9, a guide member 44 is connected to the vertical face portion 21b of the outer cable receiving portion 21 and portions of the inner cables 18a, 19a of the cables 18, 19 which are located between the pulleys 35-28 and the upper face portion 21a of the outer cable receiving portion 21 extend through the guide member 40.

With the above, as shown in Fig. 9, at portions of the inner cables 18a, 19a of the cables 18, 19 which are located between the pulleys 35-28 and the upper face portion 21a of the outer cable receiving portion 21, sway is suppressed by the guide member 44, so that winding and paying-out of the inner cables 18a, 19a of the cables 18, 19 by the pulleys 25-28 can be carried out in a stable manner.

### [Further Embodiment 2]

Instead of the arrangement shown in Figs. 3, 4 and 5, a modified arrangement as follows is also possible.

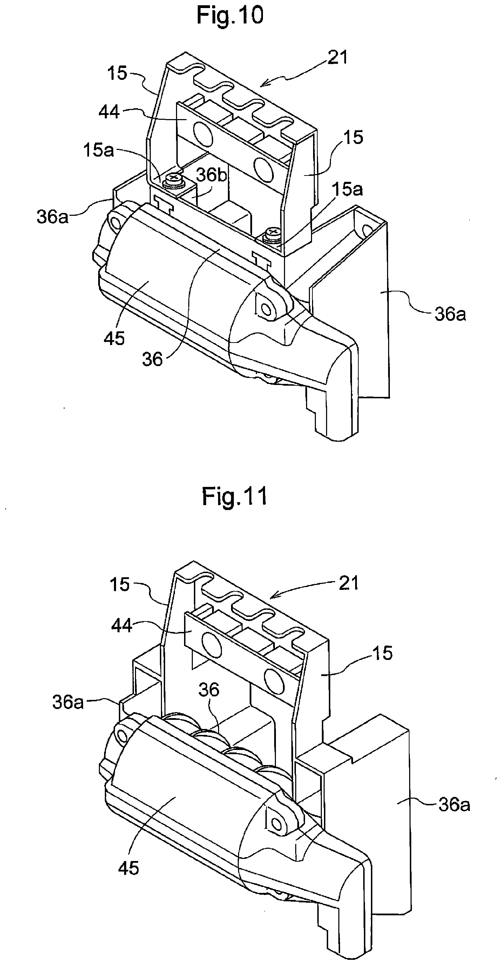

As shown in Fig. 10, there are provided inwardly oriented connecting portions 15a between the leg portions 36a of the support case 36 and the main body side of the support case 36, receiving portions 36b are provided and at lower end of the right and left support members 15. And, the connecting portions 15a of the support members 15 are bolt-connected to the receiving portion 36b of the support case 36. A guide member 44 similar to the one shown in Fig. 9 is connected to the vertical face portion 21b of the outer cable receiving portion 21. With this arrangement, the outer cable receiving portion 21 need not be connected to the horizontal side portion 7a of the support plate 7.

### [Further Embodiment 3]

Instead of the arrangement shown in Figs. 3, 4 and 5, a modified arrangement as follows is also possible.

As shown in Fig. 11, the support case 36, the outer cable receiving portion 21 and the right and left support members 15 are formed integral with each other, rather than as separate members. And, a guide member 44 similar to the one shown in Fig. 9 is connected to the vertical face portion 21b of the outer cable receiving portion 21. With this arrangement, the outer cable receiving portion 21 need not be connected to the horizontal side portion 7a of the support plate 7.

### [Further Embodiment 4]

With omission of the right and left arm portions 2, a single arm portion 2 can be provided.

With this arrangement, two cables 18 are caused to extend from the single arm portion 2, and the right hand portion 20 is provided to one of the two cables 18 and the left hand portion 20 is provided to the other of the two cables 18. Alternatively, a single cable 18 may be caused to extend from a single arm portion 2 and terminal end of the cable 18 may be bifurcated, so that the right hand portion 20 is provided at one of the bifurcated portions, while the left hand portion 20 is provided at the other of the bifurcated portions.

Instead of providing the single hand portion 20 with two cables 18, 19, it is possible to provide one hand portion 20 with a single cable or three or more cables. In the assistance tool, the right and left leg-acting portions 3 can be omitted.

### [Further Embodiment 5]

Instead of the arrangement shown in Figs. 6, 7 and 8, a modified arrangement as follows is also possible.

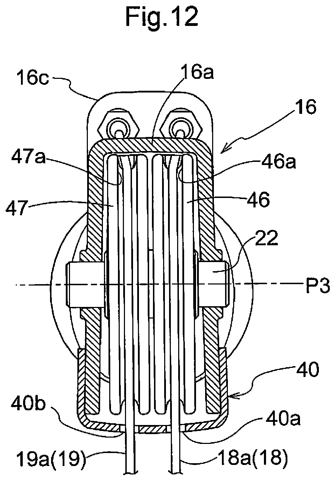

As shown in Fig. 12, two pulleys 46, 47 (corresponding to "rotary members") are supported to be independently rotatable about the rotational axis P3 of the support shaft 22. The pulley 46 defines a single groove portion 46a in the outer circumference of this pulley 46 along the circumferential direction and the pulley 47 defines a single groove portion 47a in the outer circumference of this pulley 47 along the circumferential direction.

With the above, as shown in Fig. 12, the groove portions 46a, 47a of the pulleys 46, 47 are provided side by side along the direction of the rotational axis P3. A guide portion 40 similar to the one shown in Figs. 6, 7 and 8 is attached to the lower portion of the supporting portion 16a of the pulley support member 16.

As shown in Fig. 12, the inner cable 18a of the cable 18 extends through the opening 16d of the pulley support member 16 to extend into the groove portion 46a of the pulley 46, and then enter the elongate hole 40a of the guide portion 40 to extend downwards therefrom.

The inner cable 19a of the cable 19 extends through the opening 16d of the pulley support member 16 to extend into the groove portion 47a of the pulley 47, and then enter the elongate hole 40b of the guide portion 40 to extend downwards therefrom.

### [Further Embodiment 6]

In the guide portion 40, instead of the elongate holes 40a, 40b, a circular hole portion may be provided as a cable guiding portion.

With this arrangement, the guide portion 40 may be supported to be pivotable about the rotational axis P3 of the support shaft 22 so as to move along the lower portion of the supporting portion 16a of the pulley support member 16. With this, as described above, even when the angle between the arm portion 2 and the inner cables 18a, 19a of the cables 18, 19 changes, the guide portion 40 will pivot about the rotational axis P3 so as to follow the inner cables 18a, 19a of the cables 18, 19.

Instead of providing a single guide portion 40 with a plurality of cable guiding portions, it is possible to provide a plurality of guide portions 40 each having a single cable guiding portion.

### DESCRIPTION OF NUMERALS/MARKS

- 1:: main body portion
- 2:: arm portion
- 15:: support member
- 16a:: supporting portion (cover)
- 17:: lift device
- 18, 19:: cable
- 18a, 19a:: inner cable
- 18b, 19b:: outer cable
- 18c, 19c:: the other terminal end of outer cable
- 18d, 19d:: one terminal end of outer cable
- 20:: hand portion
- 21:: outer cable receiving portion
- 25, 26, 27, 28:: pulley (rotary member of lift device)
- 29:: electric motor
- 33, 46, 47:: pulley (rotary member supported to arm portion)
- 33a, 33b, 46a, 47a:: groove portion
- 36:: support case
- 40:: guide portion
- 40a, 40b:: cable guiding portion, elongate hole
- P3:: rotational axis

## Claims

1. An assistance tool comprising:
a main body portion to be attached to the back of a worker;
an arm portion that extends upwards from the main body portion;
a cable having an inner cable and an outer cable;
one terminal end of the outer cable being connected to the arm portion, a portion of the inner cable extending out of the one terminal end of the outer cable extending downwards from the arm portion, and a hand portion for holding a load being connected to one terminal end of the inner cable; and
a lift device provided in the main body portion, the other terminal end of the inner cable and the other terminal end of the outer cable being connected to the lift device;
the lift device including
a rotary member to which the other terminal end of the inner cable is connected, the rotary member being configured to elevate the hand portion by winding up the inner cable, and to lower the hand portion by paying out the inner cable;
an outer cable receiving portion to which the other terminal end of the outer cable is connected;
a support case for rotatably supporting the rotary member; and
an electric motor for rotating the rotary member forwardly and reversely; and
a support member provided between the support case and the outer cable receiving portion, the support member extending along a portion of the inner cable located between the rotary member and the outer cable receiving portion.

2. The assistance tool as defined in 1, wherein a pair of the support members are disposed in opposition to each other across the portion of the inner cable located between the rotary member and the outer cable receiving portion.

3. The assistance tool as defined in 1 or 2, wherein the support case, the outer cable receiving portion and the support member are formed integral with each other.

4. An assistance tool comprising:
a main body portion to be attached to the back of a worker;
an arm portion that extends upwards from the main body portion;
a lift device provided in the main body portion and configured to wind up and pay out a plurality of cables;
a rotary member rotatably supported to the arm portion, the plurality of cables extending from the lift device being wound around the rotary member to extend downwards therefrom;
a hand portion connected to respective extending terminal ends of the plurality of cables and configured to hold a load;
the lift device being configured to elevate the hand portion by winding up the plurality of cables, and to lower the hand portion by paying out the plurality of cables;
the rotary member having a groove portion for receiving one of the plurality of cables, the groove being defined in an outer circumferential portion of the rotary member and extending along the circumferential direction of the rotary member;
a plurality of the groove portions being provided side by side in the direction of a rotational axis of the rotary member; and
a guide portion having a cable guiding portion through which one of the plurality of cables is inserted, a plurality of the cable guiding portions being disposed side by side along the direction of the rotational axis of the rotary member in opposition to the plurality of groove portions of the rotary member.

5. The assistance tool as defined in 4, wherein the cable guiding portion is an elongate hole that is elongated along the circumferential direction of the rotary member.

6. The assistance tool as defined in 4 or 5, wherein the guide portion is formed arcuate along the outer circumference of the rotary member.

7. The assistance tool as defined in 6, wherein:
the arm portion includes a cover that covers an upper side of the rotary member; and
the guide portion is attached to a lower side of the cover.
